# FASCICULE DE BREVET EUROPEEN

(11) **EP 3 156 931 B1**
(45) Date de publication et mention de la délivrance du brevet: **05.07.2023**
(21) Numéro de dépôt: 16192536.7
(22) Date de dépôt: 06.10.2016
(51) Int. Cl.: G06F 21/57

(54) **PROCÉDÉ DE DÉTECTION DE VULNERABILITÉS DANS UN SERVEUR VIRTUEL DE PRODUCTION D'UN SYSTÈME INFORMATIQUE VIRTUEL OU EN NUAGE**
ANGREIFBARKEITSERKENNUNGSVERFAHREN IN EINEM VIRTUELLEN PRODUKTIONSSERVER EINES VIRTUELLEN RECHNER- ODER CLOUD-SYSTEMS
METHOD FOR DETECTING VULNERABILITIES IN A VIRTUAL PRODUCTION SERVER OF A VIRTUAL OR CLOUD-BASED COMPUTER SYSTEM

(30) Priorité: 16.10.2015 FR 1502184
(43) Date de publication de la demande: 19.04.2017
(73) Titulaire: OUTPOST 24 France, 06560 Valbonne (FR)
(72) Inventeur: LOUREIRO, Sergio, 06370 Mouans Sartoux (FR); DONNAT, Frédéric, 06560 Valbonne (FR)
(74) Mandataire: Rifflart, David Franck

(56) Documents cités:
- EP-A2- 2 237 181
- US-B1- 8 904 525
- US-B1- 8 924 700

## Description

### DOMAINE DE L'INVENTION

La présente invention concerne un procédé de détection de vulnérabilités d'un serveur virtuel de production d'un système informatique virtuel ou en nuage comprenant un ou une pluralité de serveurs virtuels.

### ART ANTERIEUR

La sécurité des systèmes d'informatiques et, notamment, la sécurité des systèmes informatiques virtuels ou en nuage est adressée au moyen par une multitude d'outils parmi lesquels la détection de vulnérabilités.

La détection de vulnérabilités d'un système informatique virtuel ou en nuage consiste à tester le système par rapport à des failles connues. En pratique, ces failles sont découvertes de façon régulière par des chercheurs du domaine de la sécurité informatique ou par les éditeurs de logiciels eux-mêmes. Elles sont répertoriées dans des bases de données publiques telles la base CVE (Common Vulnerabilities and Exposures - Vulnérabilités et Expositions Communes) maintenue par un organisme dénommé le Mitre^{™}.

De façon classique, les recherches de vulnérabilités consistent à scanner les réseaux pour trouver les ports ouverts des serveurs de production, puis identifier les logiciels installés sur ces serveurs et effectuer une comparaison par rapport à la base de données des vulnérabilités. De façon alternative, la même fonction peut être mise en oeuvre au moyen d'un agent logiciel qui est installé sur le serveur de production, et qui fait la comparaison directement sur le serveur.

De telles recherches de vulnérabilités présentent cependant différents inconvénients.

Tout d'abord, la détection des systèmes d'exploitation est généralement difficile puisque cachée par les couches réseaux des hyperviseurs.

Ensuite, la performance et la disponibilité des serveurs de production (et de leurs applications) est affectée par les recherches de vulnérabilités. En effet, ces recherches consomment des ressources importantes sur les serveurs. De ce fait, dans l'art antérieur, les recherches de vulnérabilités ne sont pas automatisées, en ce sens qu'elles sont engagées sous une intervention humaine. En outre, les recherches de vulnérabilités ne sont pas effectuées de manière fréquente, par exemple tous les jours. Or, des nouvelles vulnérabilités sont identifiées chaque jour, de sorte que les serveurs de production présentent des risques potentiels dans la période de temps s'écoulant entre deux recherches de vulnérabilités.

De surcroît, les recherches de vulnérabilités profondes exigent bien souvent des droits d'administration des serveurs de production, par exemple lorsqu'un agent est installé sur le serveur de production. Or, les propriétaires des données sur les serveurs de production ne souhaitent pas communiquer les clés d'administration des serveurs de production à des tiers, même lorsqu'il s'agit de recherches de vulnérabilités, qui sont essentielles à la sécurisation de leurs données.

Enfin, certaines recherches de vulnérabilités sont susceptibles de causer des dommages aux serveurs de production. C'est la raison pour laquelle l'auditeur des serveurs de production, qui mène les recherches, évite de réaliser des tests intrusifs sur les serveurs, par exemple des tests procédant par injection SQL (Structured Query Language - Langage de Requête Structurée) ou de Cross Site Scripting (Injection de Code Indirecte) ou XSS avec une décharge de la totalité de la base de données, cette décharge pouvant impacter les performances du serveur ou même un arrêt. Ainsi, dans l'art antérieur, les recherches de vulnérabilités sont des recherches qui comprennent des tests sans risque pour les serveurs, mais qui ne sont pas exhaustives, ni rapprochées dans le temps, et qui conduisent bien souvent à l'identification de faux-positifs. US8904525B1 fait partie de l'art antérieur.

### RESUME DE L'INVENTION

Compte tenu de ce qui précède, l'invention concerne un procédé détection de vulnérabilités dans un serveur virtuel de production d'un système informatique virtuel ou en nuage, qui pallie aux inconvénients précités de l'art antérieur, pour des coûts réduits.

La solution proposée de l'invention a pour premier objet un procédé de détection de vulnérabilités d'un serveur virtuel de production d'un système informatique virtuel ou en nuage, ledit système comprenant un ou une pluralité de serveurs virtuels, caractérisé ce qu'il comporte les étapes suivantes selon lesquelles :
- on fournit un système d'analyse de vulnérabilités du ou des serveurs virtuels de production ;
- le système d'analyse de vulnérabilités se connecte au système informatique virtuel ou en nuage ;
- le système d'analyse de vulnérabilités requiert le clonage du serveur virtuel de production en vue d'obtenir un clone ou une copie disque du serveur virtuel de production ;
- le clone ou la copie disque est créé dans le système informatique virtuel ou en nuage ;
- le système d'analyse de vulnérabilités se connecte au clone ou à la copie disque ;
- le système d'analyse de vulnérabilités analyse les vulnérabilités du clone ou de la copie disque ;
- on efface le clone ou la copie disque ;
- on génère un rapport d'analyse des vulnérabilités du clone ou de la copie disque ;
- on déduit, de l'analyse des vulnérabilités du clone ou de la copie disque, les vulnérabilités dans le serveur virtuel de production ;
- on utilise le rapport d'analyse des vulnérabilités pour pallier aux vulnérabilités du serveur virtuel de production.

De manière avantageuse : - le système d'analyse de vulnérabilités utilise des fonctionnalités de clonage présentes dans le système informatique virtuel ou en nuage pour le clonage du serveur virtuel de production ; - les fonctionnalités de clonage présentes dans le système informatique virtuel ou en nuage comprennent, un hyperviseur et une infrastructure d'interfaces de programmation ; - le système d'analyse comprend un scanner et une base de données relatives aux vulnérabilités et/ou aux scripts de tests des serveurs et/ou aux politiques de sécurités, et/ou aux historiques des analyses menées ; - pour la connexion, l'adresse IP et/ou l'identifiant du serveur, et une clé permettant le clonage du serveur ou, au moins, une copie disque du ou des disques virtuels de celui-ci, sont fournis au système d'analyse, puis le système génère au moins une clé pour l'administration du clone ou pour l'attachement de la copie disque ; - la connexion se fait avec ou sans authentification, au moyen d'un tunnel sécurisé, ou de scripts copiés sur le clone ; - le clone, ou la copie disque, est placé dans une zone isolée du système informatique en nuage ; et - les vulnérabilités analysées comprennent l'analyse d'au moins une des vulnérabilités suivantes : présence de virus, présence de logiciels malveillants, piratage du serveur, présence de données non-intègres, présence de logs, présence d'intrusions, défaut dans le respect de politiques de sécurité, analyse de l'existence de fraudes intelligentes, défaut dans le code, présence de changements de tendance des serveurs ; - on place, sur le clone un logiciel renifleur ; - le procédé comporte en outre une étape selon laquelle des corrections de vulnérabilités sont effectuées sur le clone ; - lorsque une copie disque est réalisée, des virus ou des logiciels malveillants de cette copie disque ne sont pas en état d'exécution ; et - qu'il ne nécessite pas, pour sa mise en oeuvre, les clés d'administration du serveur de production.

Elle a pour second objet un système d'analyse de vulnérabilités d'un serveur virtuel de production d'un système informatique virtuel ou en nuage pour la mise en oeuvre du procédé précité. L'invention est définie dans les revendications 1 et 12.

### BREVE DESCRIPTION DES FIGURES

L'invention sera mieux comprise à la lecture de la description non limitative qui suit, rédigée au regard des dessins annexés, dans lesquels :
- la figure 1 est un schéma représentatif des moyens pour la mise en oeuvre du procédé selon l'invention ;

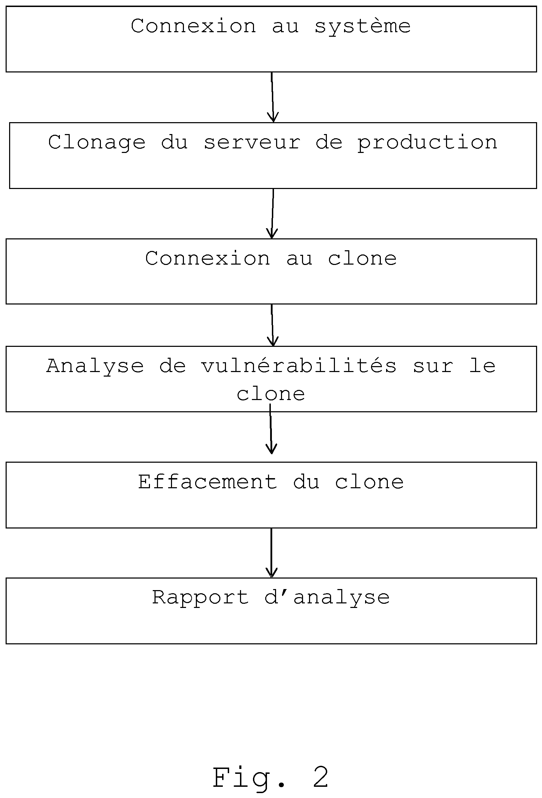

- la figure 2 représente différentes étapes du procédé selon l'invention ; et
- les figures 3A, 3B, 3C et 3D représentent différents modes de connexion du système d'analyse au clone ou à l'image disque, pour la mise en oeuvre du procédé selon l'invention.

### DESCRIPTION DETAILLEE DE L'INVENTION

L'invention a trait à un procédé de détection de vulnérabilités d'un serveur virtuel de production d'un système informatique virtuel ou en nuage.

Un système informatique virtuel ou en nuage est un ensemble de matériels, de raccordements réseau et de logiciels qui fournissent des services sophistiqués exploitables à volonté depuis n'importe quel endroit dans le monde, au travers de l'Internet. Les caractéristiques essentielles d'un système informatique virtuel ou en nuage sont la disponibilité mondiale en libre-service, l'élasticité, l'ouverture, la mutualisation et le paiement à l'usage. Notamment, les ressources sont en libre-service, et adaptées automatiquement à la demande. La capacité de stockage et la puissance de calcul sont adaptées automatiquement au besoin d'un consommateur. Les services sont mutualisés. Il est possible de combiner des ressources hétérogènes (matériel, logiciel, trafic réseau) en vue de servir plusieurs consommateurs auxquels les ressources sont automatiquement attribuées. La mutualisation améliore l'évolutivité et l'élasticité et permet d'adapter automatiquement les ressources aux variations de la demande. Le paiement est à l'usage : la quantité de services consommée dans le système est mesurée et a un impact sur la facturation. Un système informatique virtuel est un système informatique, qui comprend un hyperviseur et au mois une machine virtuelle pour la virtualisation de ce système. Le système informatique virtuel ou en nuage peut comprendre plusieurs sous-système informatique virtuels ou en nuage, par exemple, plusieurs nuages, dans certains cas des nuages gérés par des opérateurs différents.

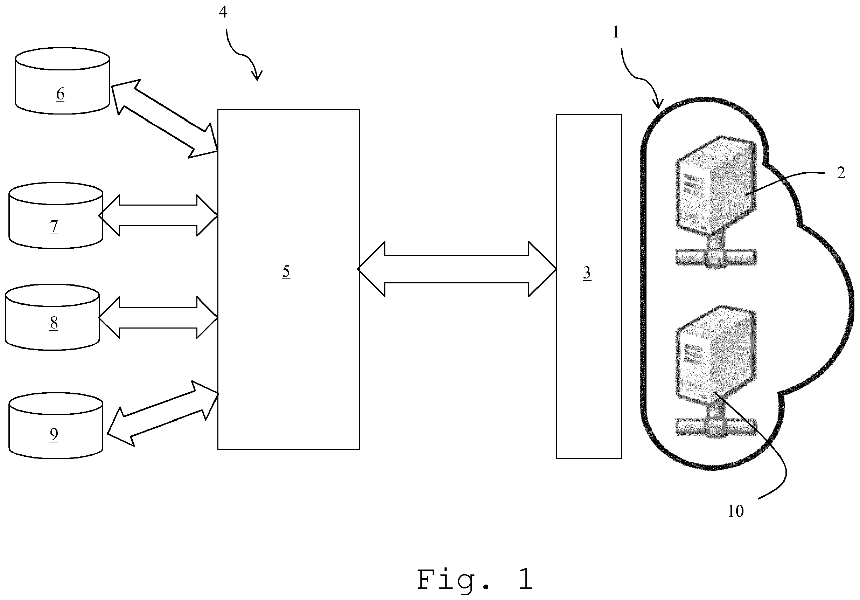

Un système informatique en nuage est représenté à la figure 1, sous la référence 1. Il comprend une pluralité de serveurs virtuels de production 2. Les serveurs virtuels de production sont des serveurs qui sont accessibles à leurs utilisateurs pour l'exécution des applications, par opposition aux serveurs de développement, sur lesquels les applications sont développées. L'architecture de ces serveurs est en trois tiers ou trois niveaux. Chaque serveur virtuel de production 2 est identifié, dans le système, par au moins un identifiant serveur. Par ailleurs, chaque serveur virtuel de production 2 est associé à un ou plusieurs disques mémoire virtuels. Chaque disque mémoire virtuel est matérialisé par un ou plusieurs disques mémoire physiques. Ces disques physiques ne sont pas montrés dans les dessins. Ils font cependant partie de la couche physique du système, contrairement aux instances virtuelles, qui font partie de la couche de virtualisation. La virtualisation qui est utilisée dans les systèmes en nuage consiste donc à créer une couche logicielle qui fait abstraction de la couche matérielle contenant les serveurs physiques. Par exemple, une unité centrale de traitement (CPU) réelle avec quatre coeurs, peut-être transformée en quatre serveurs avec une CPU dans le cas plus simple, ou un serveur virtuel peut être prévu pour consommer 20% d'une CPU, et les 80% restants peuvent être utilisés par un autre serveur virtuel. La mémoire et le disque peuvent être également partagés entre différents serveurs virtuels.

Le système informatique en nuage 1 comporte une infrastructure d'interfaces de programmation (APIs) 3, qui permet notamment d'assurer la création et la gestion des serveurs virtuels de production 2 dans le système 1.

Selon l'invention, on fournit un système d'analyse de vulnérabilités 4 des serveurs virtuels de production 2.

Un tel système d'analyse 4 comprend un scanner 5 et une base de données relatives aux vulnérabilités 6, aux scripts de tests 7 des serveurs 2, aux politiques de sécurités 8, et aux historiques des analyses menées 9. La base de données relative aux vulnérabilités 6 est construite au moyen de bases publiques, d'une veille technologique et de données récupérées sur des forums Internet de pirates (threat intelligence en langue anglaise - renseignements sur les menaces). Les scripts de test 7 permettent de tester les vulnérabilités et de les exploiter. Une telle exploitation consiste à poursuivre les tests jusqu'aux limites de résistance du serveur, ce qui ne peut pas être effectué sur des serveurs en production, à cause des risques associés. Les politiques de sécurité 8 permettent de classer les serveurs et les tests à effectuer selon leur aspect critique, la zone réseau et connexion, les menaces. Elles définissent par exemple la profondeur et la périodicité des tests. Les historiques des analyses menées sont un historique de tous les tests effectués. Un tel historique est notamment utilisé pour analyser les tendances des indicateurs de sécurité, tels que le nombre de vulnérabilités.

Ce système 4 est un système qui est extérieur au système informatique virtuel ou en nuage, et qui possède les droits suivants de listage des serveurs virtuels dans le système informatique en nuage, de lister la topologie réseau pour une duplication, et de clonage ou de réalisation d'une copie disque.

Pour la recherche de vulnérabilités dans un serveur de production 2 dans un système informatique virtuel ou en nuage 1, le propriétaire du serveur 2 doit fournir au système 4 l'adresse IP et/ou l'identifiant de ce serveur, et une clé permettant le clonage du serveur 2 ou, au moins, une copie disque du ou des disques virtuels de celui-ci. Il n'a pas à fournir de clé d'administration de ce serveur 2. Pour la fourniture de cette clé permettant le clonage (ou la copie disque), le propriétaire lui-même crée une clé avec un droit de clonage (ou de copie disque). Cette clé est entrée dans le système d'analyse 4 selon l'invention. Ce système 4 génère alors au moins un clé, mais pratiquement une paire de clés publique/privée, pour l'administration du clone. Cette procédure menée pour chaque recherche de vulnérabilités sur un serveur 2, ou une fois pour toutes, pour un même serveur 2.

Selon l'invention, le système d'analyse de vulnérabilités 4 se connecte au système informatique en nuage 1.

Puis, une fois que la connexion est réalisée, le système d'analyse 4 fait appel à une API présente dans le système 1, qui permet de cloner le serveur 2 au moyen de la clé spécifique comportant le droit de clonage (ou de copie disque), qui a été fournie au système d'analyse 4. La clé est fournie au système d'informatique en nuage et ce système crée alors un clone (ou une copie disque) du serveur virtuel 2. Ce clone est référencé 10 à la figure 1. En pratique, le clonage est effectué en faisant appel aux fonctions de l'hyperviseur, des APIs du système informatique en nuage ou du système de gestion des conteneurs, en utilisant les fonctionnalités de clonage présentes dans les systèmes de virtualisation, tels que Vmware^{™} vSphere^{™} et Microsoft Hyper V^{™}, dans les infrastructures en nuage, tels qu'Amazon Web Services^{™} et Openstack^{™}, et dans les systèmes de conteneurs, tels que Docker^{™} et Kubernetes^{™}.

On notera que tous les niveaux (ou tiers) des serveurs virtuel de productions sont clonés ou font l'objet d'une copie disque ce qui, dans la plupart des cas, représente une quantité importante de données, par exemple d'au moins plusieurs centaines de Giga-octets voire des téra-octets de données.

On notera que le clone ou la copie disque sont susceptibles d'être des clones ou des copies disques non pas du serveur virtuel de production original mais de sauvegarde ou de copies de ce serveur virtuel de production original.

Le clone 10 est avantageusement placé dans une zone réseau isolée du système informatique en nuage 1 de manière à éviter les effets de bord qui pourraient être occasionnés dans l'exécution des tests de recherche de vulnérabilités. Si le système informatique virtuel ou en nuage comprend plusieurs sous-systèmes par exemple plusieurs nuages, alors la copie disque ou le clone peut être placé dans un sous-système différent du système contenant le serveur virtuel de production, par exemple un sous-système formant un nuage différent, géré par un opérateur différent du système contenant le serveur virtuel de production sur lequel on souhaite effectuer une détection de vulnérabilités. La clone ou la copie disque ne sont pas réalisés dans le système d'analyse de vulnérabilités, qui reste extérieur au système informatique virtuel ou en nuage.

On notera que la réalisation des copies disque ou clones n'ont normalement pas d'impact de performance sur les serveurs du système 1. Ceci profite aux mécanismes de redondance, avec des copies pour une haute disponibilité, qui sont en place avec ces solutions. Selon l'invention, un accès immédiat est donné à une copie redondante et pour prévoir de nouvelles copies, sans impact de performance. Toutefois, il est possible de programmer la réalisation des copies disques ou des clones de manière que celle-ci soit effectuée en dehors des périodes de forte demande de services dans les systèmes en nuage, par exemple, en dehors des heures de travail aux Etats-Unis, si le système en nuage est basé sur le territoire des Etats-Unis.

Dans une étape ultérieure du procédé selon l'invention, le système d'analyse de vulnérabilités se connecte au clone 10 du serveur virtuel 2. Cette connexion se fait avec les nouvelles données d'authentification gérées par le logiciel, qui sont différentes des données des machines de production. Elle est réalisée au moyen de la clé privée générée antérieurement par le système d'analyse 4, pour l'administration du clone 10.

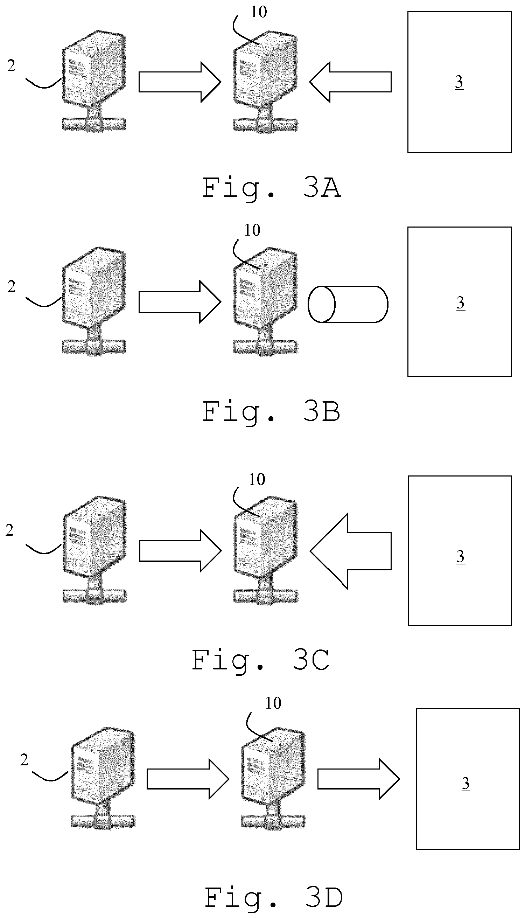

En pratique, cette connexion peut se faire sans authentification, au moyen d'un scanner de réseau par exemple du type Nmap^{™}, ou avec authentification, selon les protocoles Telnet^{™} ou RDP (Remote Desktop - Bureau à distance) - voir figure 3A. Par ailleurs, la connexion peut se faire au moyen d'un tunnel sécurisé du type SSH ou VPN (Virtual Private Network - Réseau Privé Virtuel) - voir figure 3B, ou de scripts copiés sur le clone - voir figure 3C. Lorsqu'une image disque est créée, alors l'opération réalisée est une opération d'attachement d'un disque - voir figue 3D.

Puis, le système d'analyse de vulnérabilités 4 analyse les vulnérabilités du clone 10. Il utilise à cet effet, les données contenues dans les bases de données relatives aux vulnérabilités 6, des scripts de tests contenus dans la base de scripts de tests 7, les politiques de sécurités contenues dans la base des politiques de sécurités 8, et a accès aux historiques des analyses menées antérieurement pour des clones du serveur 2 notamment.

L'analyse consiste à effectuer des tests et à vérifier des fichiers sur le clone 10. Les tests sont multiples. Ils sont réalisés avec : des scanners classiques tels que Nessus^{™} et OpenVAS^{™}, des éléments logiciels qui vérifient que les fichiers de configuration suivent des bonnes pratiques, des logiciels d'exploitation de failles comme Metasploit^{™}. Ils comprennent une analyse de fichiers de logs, la vérification des sommes de contrôle cryptographiques pour détecter les modifications, la vérification de la présence de logiciels malveillants ou de virus. Tous les tests peuvent être effectués, puisqu'ils sont réalisés sur un clone et non pas sur une machine de production et, en particulier les tests intrusifs, par exemple Metasploit^{™}, qui risquent d'impacter la performance et la disponibilité des serveurs et des applications qu'ils comportent. Par ailleurs, dans le cas des APTs (Advanced Persistent Threats - menaces avancées persistantes), les analyses consistent dans la détection de signaux faibles qui sont anormaux lorsqu'ils sont comparés à l'historique. Cette analyse n'a pas besoin d'être faite en temps réel, et peut être faite à des intervalles réguliers avec un clone avec une économie de ressources. Au lieu de faire les analyses au fil de l'eau quand les logs arrivent, le système d'analyse laisse les logs s'accumuler dans le serveur de production ou dans un serveur déporté.

Eventuellement, un logiciel dit renifleur (« sniffer » en langue anglaise) tel que les logiciels distribués sous les noms tcpdump^{™} ou wireshark^{™}, peut être placé dans le clone en vue d'analyser toutes les connections entrantes et sortantes. Le fonctionnement d'un tel logiciel renifleur est dangereux sur un serveur de production est a un impact important, en général, sur les performances de ce serveur. En procédant de la sorte sur le clone, le serveur de production ne sera pas impacté. En procédant de la sorte, une analyse fine des communications est mise en oeuvre et il est possible de détecter des connexions vers des adresses IP dangereuses ou en listes noires ou grises, par exemple des commandes et contrôles (C&C), et de déterminer les centres de contrôle des attaques de masse des réseaux de zombies (« botnet ») par exemple.

Eventuellement, des corrections des vulnérabilités identifiées sont effectuées sur le clone 10. En procédant de la sorte, il est possible de prévoir l'impact des corrections sur le serveur de production puis de décider si les corrections peuvent être mises en oeuvre sur le serveur de production lui-même, et de quelle manière. Eventuellement, après l'application des corrections sur le clone 10, celui-ci peut remplacer le serveur de production.

Dans le cas d'une image disque, le serveur n'est pas en mode exécution. Il n'est donc pas nécessaire d'obtenir des ressources en CPU (unité de contrôle centrale) additionnelle, et l'analyse est dès lors plus économique (pas de coûts liés à la CPU) et plus sécurisée puisque si la machine virtuelle est infectée ou contient des virus/logiciels malveillants, ces virus ou ces logiciels malveillants ne sont pas en état d'exécution et les contre-mesures possibles ne sont pas mises en oeuvre.

Lorsque les tests sont terminés, alors le clone 10 ou la copie disque sont effacés.

Des rapports sont construits et des tableaux de bord sont construits avec l'état de la sécurité des serveurs virtuels. Ces tableaux de bord et tableaux sont construits avec des indicateurs sur la sécurité des serveurs virtuels et, plus généralement, du système informatique en nuage (réseau, pare-feu, applications, données). Il permet de générer des alertes quand le système d'analyse identifie une vulnérabilité critique ou un évènement qui viole une politique de sécurité. Les rapports sont générés avec l'historique des tests effectués, les résultats et les tendances.

Ce processus peut être mis en oeuvre à la demande. Il peut aussi être répété de manière automatique avec une périodicité qui est configurable, par exemple une fois par jour, une fois par semaine ou une fois par mois. Il est alors possible d'effectuer un suivi de façon continue des failles avec des coûts réduits.

Le procédé selon l'invention peut avantageusement remplacer les systèmes de détection de virus, de logiciels malveillants, ou de réseaux de machines contrôlés par des pirates ; les systèmes de vérification de l'intégrité des données stockées sur le serveur ; les systèmes d'analyse de logs et de SIEM (System Information and Event Management - système de gestion de l'information et des évènements) ; les systèmes de détection d'intrusion ; les systèmes de vérification d'application des politiques de sécurité ; les systèmes d'analyse et de traitement des menaces ; les systèmes d'analyse de code ; les systèmes de détection et d'analyse des tendances ; et les systèmes d'analyse des changements effectués sur les serveurs. Il n'est pas nécessaire, selon l'invention, d'installer un agent sur le serveur pour mener les actions précitées.

## Revendications

1. Procédé de détection de vulnérabilités d'au moins un serveur virtuel de production (2) d'un premier système correspondant à un système informatique virtuel ou en nuage (1), ledit procédé comprenant les étapes suivantes :
- une fourniture d'un second système (4) pour analyser les vulnérabilités dudit au moins un serveur virtuel de production (2) du premier système (1), ledit second système (4) étant extérieur audit premier système (1),
- une connexion du second système (4) avec le premier système (1) ;
- un appel par le second système (4) d'une infrastructure d'interfaces de programmation, dite API, dans le premier système (1) pour créer un clone ou une copie disque dudit au moins un serveur virtuel de production (2) dans le premier système, en utilisant des fonctionnalités de clonage de ladite API ;
- une connexion du second système audit clone (10) ou ladite copie disque dans le premier système;
- une analyse par ledit second système des vulnérabilités dudit clone (10) ou de ladite copie disque dans le premier système;
- un effacement par ledit second système dudit clone (10) ou de ladite copie disque dans le premier système;
- une génération par ledit second système d'un rapport d'analyse des vulnérabilités du clone (10) ou de la copie disque dans le premier système ;
- une déduction par ledit second système , des vulnérabilités dans ledit au moins un serveur virtuel de production (2) à partir de l'analyse des vulnérabilités du clone (10) ou de la copie disque dans le premier système;
- une utilisation du rapport d'analyse des vulnérabilités pour pallier aux vulnérabilités du serveur virtuel de production (2).

2. Procédé selon la revendication 1, **caractérisé en ce que** le second système utilise des fonctionnalités de clonage d'un hyperviseur du premier système pour le clonage dudit au moins serveur virtuel de production (2).

3. Procédé selon l'une des revendications précédentes, **caractérisé en ce que** le second système comprend un scanner (5) et une base de données relatives aux vulnérabilités (6) et/ou aux scripts de tests (7) des serveurs (2) et/ou aux politiques de sécurités (8), et/ou aux historiques des analyses menées (9).

4. Procédé selon l'une des revendications précédentes, **caractérisé en ce que**, pour la connexion, l'adresse IP et/ou l'identifiant dudit au moins un serveur (2), et une clé permettant le clonage du serveur (2) ou, au moins, une copie disque du ou des disques virtuels de celui-ci, sont fournis au second système (4), puis ledit second système (4) génère au moins une clé pour l'administration du clone (10) ou pour l'attachement de la copie disque.

5. Procédé selon l'une des revendications précédentes, **caractérisé en ce que** la connexion se fait avec ou sans authentification, au moyen d'un tunnel sécurisé, ou de scripts copiés sur le clone (10).

6. Procédé selon l'une des revendications précédentes, **caractérisé en ce que** le clone (10), ou la copie disque, est placé dans une zone isolée du premier système (1).

7. Procédé selon l'une des revendications précédentes, **caractérisé en ce que** les vulnérabilités analysées comprennent l'analyse d'au moins une des vulnérabilités suivantes : présence de virus, présence de logiciels malveillants, piratage du serveur, présence de données non-intègres, présence de logs, présence d'intrusions, défaut dans le respect de politiques de sécurité, analyse de l'existence de fraudes intelligentes, défaut dans le code, présence de changements de tendance des serveurs.

8. Procédé selon l'une des revendications précédentes, **caractérisé en ce que** l'on place, sur le clone (10) un logiciel renifleur.

9. Procédé selon l'une des revendications précédentes, **caractérisé en ce qu'**il comporte en outre une étape selon laquelle des corrections de vulnérabilités sont effectuées sur le clone (10).

10. Procédé selon l'une des revendications précédentes, **caractérisé en ce que** lorsqu'une copie disque est réalisée, des virus ou des logiciels malveillants de cette copie disque ne sont pas en état d'exécution.

11. Procédé selon l'une des revendications précédentes, **caractérisé en ce qu'**il ne nécessite pas, pour sa mise en oeuvre, les clés d'administration du serveur de production.

12. Système d'analyse de vulnérabilités (4) d'un serveur virtuel de production (2) d'un premier système informatique virtuel ou en nuage (1) pour la mise en oeuvre du procédé selon l'une des revendications précédentes.

## Patentansprüche

1. Verfahren zur Angreifbarkeitserkennung mindestens eines virtuellen Produktionsservers (2) eines ersten Systems entsprechend einem virtuellen Rechner- oder Cloud-System (1), wobei das Verfahren die folgenden Schritte umfasst:
- eine Bereitstellung eines zweiten Systems (4) zum Analysieren der Angreifbarkeiten des mindestens einen virtuellen Produktionsservers (2) des ersten Systems (1), wobei das zweite System (4) außerhalb des ersten Systems (1) ist;
- eine Verbindung des zweiten Systems (4) mit dem ersten System (1);
- einen Aufruf durch das zweite System (4) einer Infrastruktur an Programmierschnittstellen, API genannt, in dem ersten System (1) zum Erstellen eines Klons oder einer Plattenkopie des mindestens einen virtuellen Produktionsservers (2) in dem ersten System, durch Verwenden der Klon-Funktionen der API;
- eine Verbindung des zweiten Systems mit dem Klon (10) oder der Plattenkopie in dem ersten System;
- eine Analyse durch das zweite System der Angreifbarkeiten des Klons (10) oder der Plattenkopie in dem ersten System;
- ein Löschen durch das zweite System des Klons (10) oder der Plattenkopie in dem ersten System;
- ein Generieren durch das zweite System eines Analyseberichts der Angreifbarkeiten des Klons (10) oder der Plattenkopie in dem ersten System;
- eine Ableitung durch das zweite System der Angreifbarkeiten in dem mindestens einen virtuellen Produktionsserver (2) ausgehend von der Analyse der Angreifbarkeiten des Klons (10) oder der Plattenkopie in dem ersten System;
- eine Verwendung des Analyseberichts der Angreifbarkeiten zum Wettmachen der Angreifbarkeiten des virtuellen Produktionsservers (2).

2. Verfahren nach Anspruch 1, **dadurch gekennzeichnet, dass** das zweite System Klonfunktionen eines Hypervisors des ersten Systems zum Klonen des mindestens einen virtuellen Produktionsservers (2) verwendet.

3. Verfahren nach einem der vorstehenden Ansprüche, **dadurch gekennzeichnet, dass** das zweite System einen Scanner (5) und eine Datenbank in Bezug auf die Angreifbarkeiten (6) und/oder Testscripts (7) der Server (2) und/oder von Sicherheitsstrategien (8), und/oder Historien der durchgeführten Analysen (9) umfasst.

4. Verfahren nach einem der vorstehenden Ansprüche, **dadurch gekennzeichnet, dass** dem zweiten System (4) für die Verbindung die IP-Adresse und/oder der Benutzername des mindestens einen Servers (2) und ein Schlüssel, der das Klonen des Servers (2) ermöglicht, oder, mindestens eine Plattenkopie der virtuellen Platte oder Platten desselben bereitgestellt werden, und das zweite System (4) danach mindestens einen Schlüssel zur Verwaltung des Klons (10) oder zur Bindung der Plattenkopie generiert.

5. Verfahren nach einem der vorstehenden Ansprüche, **dadurch gekennzeichnet, dass** die Verbindung mit oder ohne Authentifizierung, anhand eines gesicherten Tunnels, oder von Scripts erfolgt, die auf den Klon (10) kopiert werden.

6. Verfahren nach einem der vorstehenden Ansprüche, **dadurch gekennzeichnet, dass** der Klon (10) oder die Plattenkopie in einem isolierten Bereich des ersten Systems (1) platziert wird.

7. Verfahren nach einem der vorstehenden Ansprüche, **dadurch gekennzeichnet, dass** die analysierten Angreifbarkeiten die Analyse von mindestens einer der folgenden Angreifbarkeiten umfassen: Vorhandensein eines Virus, Vorhandensein von Malware, Piraterie des Servers, Vorhandensein nicht integrierter Daten, Vorhandensein von Protokollen, Vorhandensein von unerwünschtem Eindringen, mangelhafte Beachtung der Sicherheitsstrategien, Analyse des Vorhandenseins von intelligenten Betrügereien, Fehler im Code, Vorhandensein von Trendänderungen in den Servern.

8. Verfahren nach einem der vorstehenden Ansprüche, **dadurch gekennzeichnet, dass** auf dem Klon (10) eine Schnüffler-Software platziert wird.

9. Verfahren nach einem der vorstehenden Ansprüche, **dadurch gekennzeichnet, dass** es weiter einen Schritt beinhaltet, bei dem Korrekturen von Angreifbarkeiten am Klon (10) durchgeführt werden.

10. Verfahren nach einem der vorstehenden Ansprüche, **dadurch gekennzeichnet, dass**, wenn eine Plattenkopie durchgeführt wird, Viren oder Malware dieser Plattenkopie nicht im Ausführungsstatus sind.

11. Verfahren nach einem der vorstehenden Ansprüche, **dadurch gekennzeichnet, dass** es zu dessen Umsetzung keiner Verwaltungsschlüssel des Produktionsservers bedarf.

12. System zur Angreifbarkeitserkennung (4) eines virtuellen Produktionsservers (2) eines ersten Rechner- oder Cloud-Systems (1) zur Umsetzung des Verfahrens nach einem der vorstehenden Ansprüche.

## Claims

1. Method for detecting vulnerabilities of at least one virtual production server (2) of a first system corresponding to a virtual or cloud computer system (1), said method comprising the following steps:
- providing a second system (4) for analysing the vulnerabilities of said at least one virtual production server (2) of the first system (1), said second system (4) being outside said first system (1);
- connecting the second system (4) with the first system (1) ;
- the second system (4) calling an infrastructure of programming interfaces, called API, in the first system (1) to create a clone or a disk copy of said at least one virtual production server (2) in the first system, by using cloning functions of said API;
- connecting the second system to said clone (10) or said disk copy in the first system;
- said second system analysing the vulnerabilities of said clone (10) or of said disk copy in the first system;
- said second system erasing said clone (10) or said disk copy in the first system;
- said second system generating a report of analysis of the vulnerabilities of the clone (10) or of the disk copy in the first system;
- said second system deducing the vulnerabilities in said at least one virtual production server (2) from the analysis of the vuh1erabilities of the clone (10) or of the disk copy in the first system;
- using the report of analysis of the vulnerabilities to fix the vulnerabilities of the virtual production server (2) .

2. Method according to claim 1, **characterised in that** the second system uses cloning functions of a hypervisor of the first system for the cloning of said at least one virtual production server (2).

3. Method according to one of the preceding claims, **characterised in that** the second system comprises a scanner (5) and a database of data relative to the vulnerabilities (6) and/or to the scripts of tests (7) of the servers (2) and/or to the security policies (8) and/or to the histories of the analyses carried out (9).

4. Method according to one of the preceding claims, **characterised in that** for the connection, the IP address and/or the identifier of said at least one server (2), and a key allowing the cloning of the server (2) or, at least, a disk copy of the virtual disk or disks of the latter, are provided to the second system (4), then said second system (4) generates at least one key for the administration of the clone (10) or for the attachment of the disk copy.

5. Method according to one of the preceding claims, **characterised in that** the connection is carried out with or without authentication, via a secure tunnel, or scripts copied onto the clone (10).

6. Method according to one of the preceding claims, **characterised in that** the clone (10), or the disk copy, is placed in an isolated zone of the first system (1).

7. Method according to one of the preceding claims, **characterised in that** the vulnerabilities analysed comprise the analysis of at least one of the following vulnerabilities: presence of viruses, presence of malware, hacking of the server, presence of compromised data, presence of logs, presence of intrusions, lack of following of security policies, analysis of the existence of intelligent fraud, flaw in the code, presence of changes in trend in the servers.

8. Method according to one of the preceding claims, **characterised in that** a sniffer software is placed on the clone (10).

9. Method according to one of the preceding claims, **characterised in that** it further includes a step according to which corrections of vulnerabilities are carried out in the clone (10).

10. Method according to one of the preceding claims, **characterised in that** when a disk copy is made, viruses or malware of this disk copy are not being executed.

11. Method according to one of the preceding claims, **characterised in that** it does not require, for its implementation, the administrator keys of the production server.

12. System (4) for analysing vulnerabilities of a virtual production server (2) of a first virtual or cloud computer system (1) for the implementation of the method according to one of the preceding claims.
